# EUROPEAN PATENT SPECIFICATION

(11) **EP 0 948 888 B1**
(45) Date of publication and mention of the grant of the patent: **29.11.2000**
(21) Application number: 99201115.5
(22) Date of filing: 07.04.1999
(51) Int. Cl.: A01K 1/01

(54) **Dung processing system**
System für die Behandlung von Dung
Système de traitement de fumier

(30) Priority: 08.04.1998 NL 1008842
(43) Date of publication of application: 13.10.1999
(73) Proprietor: TOLSMA TECHNIEK B.V., NL-8304 AT Emmeloord (NL)
(72) Inventor: Tolsma, Pieter Sjoerd, 8302 JZ Emmeloord (NL); Tolsma, Cornelis Maarten, 8302 NA Emmeloord (NL)
(74) Representative: Ottevangers, Sietse Ulbe

(56) References cited:
- EP-A- 0 047 043
- EP-A- 0 518 438
- EP-A- 0 635 205
- FR-A- 1 478 611
- NL-C- 1 002 289

## Description

The present invention relates to a dung processing system for cattle houses and the like, comprising a dung conveyor belt which is suitable for discharging in a mutually separate condition at least a part of the liquid and solid excrements deposited thereon by the cattle, and air supply means by which an air current can be passed along the excrements to dry them.

Such apparatus is known from EP-A-0 635 205. The air supply means in this publication form a part of a climate control system for a closed cattle house, wherein air is blown from above into the space where animals are accommodated, which air is heated up by the body heat of the animals and is extracted via the grids in the cattle house floor and along the dung conveyor belt passing under the cattle house floor. Thus, this air current contributes to the drying of the excrements present on the dung conveyor belt. Such drying can further be promoted by providing heating means under the dung conveyor belt.

To have this drying process proceed more efficiently, the dung processing system such as it is described in the opening paragraph hereof is characterized, according to the invention, in that in the longitudinal direction of the dung conveyor belt, above at least that portion of the dung conveyor belt where the liquid excrements collect, a covering element is arranged, forming a tunnel together with the dung conveyor belt, through which tunnel the air current is passed. Owing to this construction, the air current is contacted more directly with the liquid excrements present on the dung conveyor belt. Naturally, it may be favorable, if the cattle house is suitable for that purpose, to use this measure in addition to the above-mentioned measures for drying liquid excrements indicated in EP-A-0 635 205.

To enable the liquid and solid excrements, as soon as they end up on the dung conveyor belt, to be separated from each other, the dung conveyor belt has an at least partly sloping surface in its transverse direction towards a side, and the covering element is arranged above the lowermost portion of the dung conveyor belt. In EP-A-0 635 205 the dung conveyor belt is designed to be concave at the top, so that the liquid excrements collect in the central portion, while the solid excrements remain on the conveyor belt, distributed across the width of the dung conveyor belt, so that only a limited separation between liquid and solid excrements is obtained.

The dung conveyor belt and the covering element are located under the cattle house floor, while in the cattle house floor grids are provided which are preferably located above a higher surface portion of the dung conveyor belt. As a result, all excrements end up on the dung conveyor belt itself, and not on the covering element, so that the liquid excrements can flow to the lowermost portion of the dung conveyor belt present on the side thereof.

According to a further facet of the invention, a fan is present for passing a turbulent air current through the tunnel at a relatively high velocity. It is precisely through such an air current that an efficient drying away of the liquid excrements is obtained. It is then advantageous when the direction of movement of the air current is opposite to that of the dung conveyor belt.

In a preferred embodiment, the tunnel has a height of about 0.5 to 10 cm, preferably about 2 to 3 cm.

The invention will now be further explained with reference to the accompanying drawings. In the drawings:
Fig. 1 schematically shows a part of a pig house, with a cross section of the dung conveyor belt according to the invention; while
Fig. 2 schematically shows a longitudinal section of the dung conveyor belt.

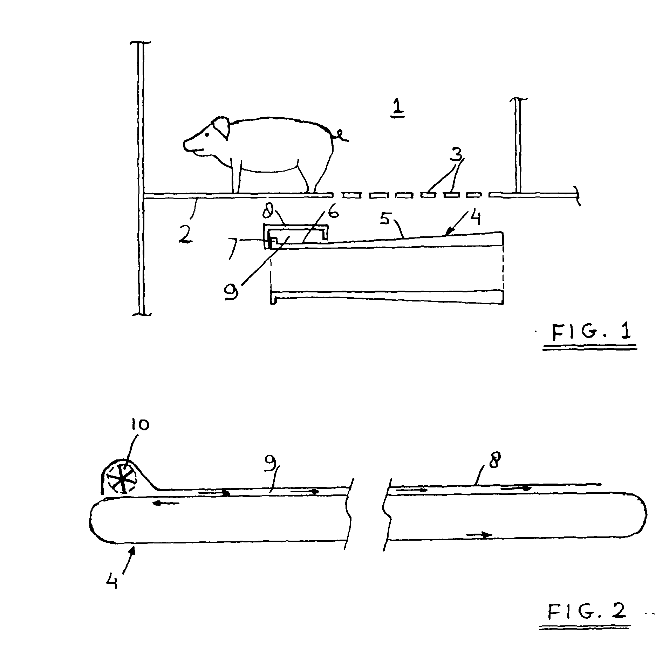

Fig. 1 schematically shows a part of a pig house with an accommodation space 1 for one or more pigs. The floor 2 of the house comprises grids 3 through which the excrements of the pigs in the accommodation space can fall. Located under the floor 2 and the grids 3 is a dung conveyor belt 4. This dung conveyor belt is designed as en endless conveyor belt which extends through the entire house, in any case under the accommodation spaces of the pigs, and which in Fig. 1 extends perpendicularly to the plane of the drawing. To separate from each other the liquid and solid excrements falling thereon, the top surface of the conveyor belt 4 slopes down towards the side. The solid excrements remain lying on the slanting portion 5, while the liquid excrements move to the side 6 of the conveyor belt. To prevent these liquid excrements from falling laterally off the conveyor belt 4, the latter is provided with an edge 7 on the lowermost side thereof. Arranged above the lowermost side 6 is a covering element 8. This covering element 8, together with the conveyor belt 4, forms a tunnel 9. The height of this tunnel is in the order of about 0.5 to 10 cm and is preferably about 2 to 3 cm. The tunnel 9 extends practically over the entire length of the conveyor belt 4, as is indicated in Fig. 2, and, in the embodiment shown, under the floor 2, so that excrements falling through the grids 3 end up on the sloping portion 5 and not on the covering element 8. By means of a motor-driven fan 10, an air current is passed through the tunnel 9, at a velocity such that air turbulences occur in the tunnel. Owing particularly to the turbulent air current, the drying process proceeds particularly fast. The direction of movement of the air current is opposite to that of the conveyor belt 4. By passing this air current over the liquid excrements on the portion 6 of the dung conveyor belt 4, an efficient drying occurs. The vapors thereby obtained are discharged at the end of the tunnel to filtering installations, known per se. What is further achieved owing to the rapid drying obtained in the tunnel is that the formation of ammonia and further aromatic odors is prevented to a considerable extent, resulting in a lesser loading of the filtering installations as well. If desired, a further contribution to the drying process can be made by an air current circulating in the house and heated by the body heat of the animals and/or by heating elements under the dung conveyor belt, as is described in the above-mentioned European patent application EP-A-0 635 205.

The invention is not limited to the exemplary embodiment described here with reference to the drawings, but encompasses all kinds of modifications thereof, naturally insofar as they fall within the scope of protection of the following claims.

## Claims

1. A dung processing system for cattle houses and the like, comprising a dung conveyor belt (4) which is suitable for discharging in a mutually separate condition at least a part of the liquid and solid excrements deposited thereon by the cattle, and air supply means (10) by which an air current can be passed along the excrements to dry them, characterized in that in the longitudinal direction of the dung conveyor belt, above at least that portion (6) of the dung conveyor belt (4) where the liquid excrements collect, a covering element (8) is arranged, forming a tunnel (9) together with the dung conveyor (4) belt, through which tunnel (9) the air current is passed.

2. A dung processing system according to claim 1, characterized in that the dung conveyor belt (4) has an at least partly sloping surface in its transverse direction towards a side, and the covering element (8) is arranged above the lowermost portion (6) of the dung conveyor belt (14).

3. A dung processing system according to claim 2, characterized in that the dung conveyor belt (4) and the covering element (8) are located under the cattle house floor, while in the cattle house floor grids (3) are arranged which are located above a higher surface portion of the dung conveyor belt (4).

4. A dung processing system according to any one of the preceding claims, characterized in that a fan (10) is present for passing a turbulent air current through the tunnel (9) at a relatively high velocity.

5. A dung processing system according to any one of the preceding claims, characterized in that the direction of movement of the air current is opposite to that of the dung conveyor belt (4).

6. A dung processing system according to any one of the preceding claims, characterized in that the tunnel (9) has a height of about 0.5 to 10 cm, preferably about 2 to 3 cm.

## Patentansprüche

1. System zur Behandlung von Dung für Viehställe und ähnliches, umfassend ein Dung-Förderband (4), das zur Entsorgung in voneinander getrenntem Zustand zumindest eines Teils der durch das Vieh darauf abgegebenen flüssigen und festen Exkremente geeignet ist, und eine Luftzufuhr-Vorrichtung (10), durch die ein Luftstrom über die Exkremente hinweggeführt werden kann, um sie zu trocknen, dadurch gekennzeichnet, daß in der Längsrichtung des Dung-Förderbandes, oberhalb zumindest jenes Abschnitts (6) des Dung-Förderbandes (4), in dem sich die Flüssigexkremente sammeln, ein Abdeckungselement (8) angebracht ist, wodurch zusammen mit dem Dung-Förderband (4) ein Tunnel (9) entsteht, durch welchen Tunnel (9) der Luftstrom geleitet wird.

2. System zur Behandlung von Dung nach Anspruch 1, dadurch gekennzeichnet, daß das Dung-Förderband (4) eine zumindest teilweise schräge Oberfläche in seiner Querrichtung zu einer Seite hin aufweist, und das Abdeckungselement (8) oberhalb des untersten Abschnitts (6) des Dung-Förderbandes (4) angebracht ist.

3. System zur Behandlung von Dung nach Anspruch 2, dadurch gekennzeichnet, daß das Dung-Förderband (4) und das Abdeckungselement (8) unter den Viehstallboden eingebracht sind, wobei im Viehstallboden Gitter (3) angeordnet sind, die sich über einem höheren Abschnitt der Oberfläche des Dung-Förderbandes (4) befinden.

4. System zur Behandlung von Dung nach einem der vorangehenden Ansprüche, dadurch gekennzeichnet, daß ein Ventilator (10) zum Durchleiten eines Wirbelluftstroms durch den Tunnel (9) bei einer relativ hohen Geschwindigkeit vorhanden ist.

5. System zur Behandlung von Dung nach einem der vorangehenden Ansprüche, dadurch gekennzeichnet, daß die Bewegungsrichtung des Luftstroms der des Dung-Förderbands (4) entgegengesetzt ist.

6. System zur Behandlung von Dung nach einem der vorangehenden Ansprüche, dadurch gekennzeichnet, daß der Tunnel (9) eine Höhe von etwa 0,5 bis 10 cm, vorzugsweise etwa 2 bis 3 cm, aufweist.

## Revendications

1. Système de traitement de fumier pour des étables et analogue, comprenant une courroie de convoyage de fumier (4) qui convient pour décharger dans un état mutuellement séparé au moins une partie des excréments liquides et solides déposés sur celle-ci par le bétail, et un moyen d'amenée d'air (10) par lequel un courant d'air peut être amené à passer le long des excréments pour les sécher, caractérisé en ce que dans la direction longitudinale de la courroie de convoyage de fumier, au moins au-dessus de la partie (6) de la courroie de convoyage de fumier (4) où sont recueillis les excréments liquides, un élément couvrant (8) est disposé, en formant un tunnel (9) ensemble avec la courroie de convoyage de fumier (4), à travers ledit tunnel (9), le courant d'air est amené à passer.

2. Système de traitement de fumier selon la revendication 1, caractérisé en ce que la courroie de convoyage de fumier (4) a une surface au moins partiellement inclinée dans sa direction transversale vers un côté, et l'élément couvrant (8) est disposé au-dessus de la portion la plus basse (6) de la courroie de convoyage de fumier (4).

3. Système de traitement de fumier selon la revendication 2, caractérisé en ce que la courroie de convoyage de fumier (4) et l'élément couvrant (8) sont situés sous le plancher de l'étable, alors que dans le plancher de l'étable, des grilles (3) sont agencées qui sont localisées au-dessus d'une portion de surface plus élevée de la courroie de convoyage de fumier (4).

4. Système de traitement de fumier selon l'une des revendications précédentes, caractérisé en ce qu'un ventilateur (10) est présent pour faire passer un courant d'air turbulent à travers le tunnel (9) à une vitesse relativement élevée.

5. Système de traitement de fumier selon l'une des revendications précédentes, caractérisé en ce que la direction de mouvement du courant d'air est opposée à celle de la courroie de convoyage de fumier (4).

6. Système de traitement de fumier selon l'une des revendications précédentes, caractérisé en ce que le tunnel (9) a une hauteur d'environ 0,5 à 10 cm, de préférence d'environ 2 à 3 cm.
